# FASCICULE DE BREVET EUROPEEN

(11) **EP 0 975 916 B1**
(45) Date de publication et mention de la délivrance du brevet: **19.09.2001**
(21) Numéro de dépôt: 98919189.5
(22) Date de dépôt: 30.03.1998
(51) Int. Cl.: F16L 55/165

(54) **DISPOSITIF DE REVERSION**
INVERSIONSEINRICHTUNG
REVERSION DEVICE

(30) Priorité: 14.04.1997 BE 9700340
(43) Date de publication de la demande: 02.02.2000
(73) Titulaire: Norditubes Technologies AB, 4000 Liège (BE)
(72) Inventeur: DAVELOOSE, Frank, B-4802 Heusy (BE); RAYMOND, Guy, B-4400 Ivoz Ramet (BE)
(74) Mandataire: Kihn, Pierre Emile Joseph
(86) Numéro de dépôt international: EP9801849
(87) Numéro de publication internationale: WO9846929

(56) Documents cités:
- EP-A- 0 304 914
- EP-A- 0 620 102
- WO-A-97/04269
- FR-A- 2 724 004

## Description

La présente invention concerne un dispositif de réversion pour la mise en place de gaines souples et étanches pour la rénovation ou la protection de canalisations par chemisage interne ou externe.

On connaît depuis de nombreuses années des méthodes de réhabilitation de tuyaux qui font appel à l'insertion de gaines textiles étanches, imprégnées de résine, insérées dans le tuyau endommagé puis polymérisées en place.

De telles méthodes sont décrites, entre autres, dans les brevets UK 1 340 068, UK 1 449 455, EP 0 253 013, JP 80-318690/18, JP 86-090659/14.

L'une des méthodes permettant d'insérer facilement une gaine dans un tuyau à réhabiliter consiste à forcer la gaine dans le tuyau en la retournant et en la faisant progresser au moyen d'une pression exercée soit par une colonne d'eau (comme décrit par exemple dans le brevet UK 1 449 455) soit par de l'air comprimé (comme décrit dans le brevet JP 80-318690/18). La polymérisation de la gaine a ensuite lieu soit en chauffant l'eau qui a servi à la réversion pour ce qui est du premier cas, soit en injectant de la vapeur d'eau pour ce qui est du second cas.

La réversion à l'aide d'une colonne d'eau offre l'avantage - entre autres - de pouvoir insérer des longueurs quasi-illimitées de gaines, d'une grande variété de diamètres et à l'aide d'équipements relativement peu onéreux. La colonne d'eau est le plus souvent réalisée à l'aide d'un simple échafaudage ou en faisant appel à une nacelle élévatrice montée sur un camion. Les hauteurs à atteindre sont de l'ordre de 5 à 10 mètres suivant les longueur, diamètre et poids des gaines à insérer.

Cette méthode est difficilement applicable lorsqu'on ne dispose pas d'une hauteur libre suffisante en raison par exemple de la présence de fils électriques ou dans le cas de chantiers se situant à l'intérieur d'un bâtiment.

Une amélioration de cette méthode est décrite dans le brevet US 5,154,936. Ce brevet décrit une machine permettant de reverser des longueurs quasi-infinies de gaines, à l'aide d'eau mais sans faire appel à une colonne élevée.

Cependant, cette méthode nécessite de grandes quantités d'eau qui ne sont pas toujours aisément disponibles, de plus il faut chauffer cette eau et enfin il faut se débarrasser de l'eau chaude - qui peut éventuellement être polluée - après usage.

De plus, des variations rapides de la pression ne sont pas possibles, ce qui constitue un désavantage pour pouvoir franchir des coudes ou autres obstacles présents dans la canalisation à réhabiliter.

Une autre méthode d'insertion par réversion consiste à utiliser de l'air comprimé comme fluide de pression. Une telle méthode est décrite par exemple dans le brevet japonais JP 80-318690/18.

L'utilisation d'air comprimé offre de nombreux avantages: l'air est disponible partout, l'air comprimé permet de s'affranchir d'une colonne élevée et de ses inconvénients, permet des variations rapides de pression dans le tuyau à rénover, permet de retirer aisément la gaine en cours de chantier si besoin est. La polymérisation se fait à l'aide de vapeur d'eau mélangée à l'air comprimé. Ceci permet de diminuer considérablement les temps de polymérisation et de surcroît, l'élimination de la vapeur se fait sans difficulté.

La méthode décrite dans le brevet japonais JP 80-31869C/18 présente toutefois deux inconvénients importants. Le premier résulte du fait que l'intégralité de la gaine utilisée doit être introduite dans une enceinte sous pression. On est donc limité en longueur de gaine, car les dimensions de la machine ne permettent pas de contenir des longueurs particulièrement importantes. A titre d'exemple, pour des gaines classiques destinées à la rénovation de tuyaux sous pression (eau, gaz, fluides industriels), les équipements actuellement disponibles permettent d'embarquer environ 350 à 500 mètres de gaines alors que pour des canalisations gravitaires (conduites d'assainissement, drainage, etc.), ces longueurs sont limitées à 150 mètres environ. Dans un grand nombre de cas, il s'agit-là d'une limitation importante.

Le deuxième inconvénient réside dans le fait que les équipements de réversion pour la mise en oeuvre de cette méthode sont techniquement élaborés, onéreux et lourds.

Pour s'accommoder de plus grandes longueurs d'insertion on pourrait par exemple augmenter les dimensions de la machine de réversion. Ceci poserait cependant de réels problèmes car , au delà d'une certaine limite, la machine de réversion ne pourrait plus être contenue dans des équipements normaux de transport (remorques, conteneurs, ...) et son poids deviendrait excessif.

Enfin, les prix des équipements de réversion à l'air comprimé sont déjà relativement élevés et l'augmentation de leurs dimensions ne ferait qu'augmenter cet inconvénient.

Le document FR-A-2 724 004 décrit un procédé de mise en place d'une gaine dans une conduite par inversion, à l'aide d'un sas muni de moyens de mise sous pression. La gaine est disposée à l'extérieur du sas et pénètre dans ce sas par un orifice défini par une plaque de support sur laquelle glisse la gaine, et par un clapet monté articulé autour d'un axe sur une paroi du sas. Le clapet, monté de manière réglable autour de l'axe, est constitué d'une plaque métallique recouverte à son extrémité libre d'un matériau souple qui presse la gaine sur la plaque de support.

Le but de la présente invention est de proposer un dispositif de réversion pour la mise en place de gaines souples et étanches pour la rénovation ou la protection de canalisations par chemisage interne ou externe permettant d'accommoder des longueurs importantes de gaine.

A cet effet, l'invention propose un dispositif de réversion pour la mise en place de gaines souples et étanches pour la rénovation ou la protection de canalisations par chemisage interne ou externe comprenant une enceinte de réversion pouvant être mise sous pression à l'aide d'un gaz comprimé dans laquelle la gaine est introduite au fur et à mesure de la réversion par un orifice adapté aux dimensions de la gaine mise en oeuvre, cet orifice comprenant des moyens pour limiter les fuites de gaz comprimé. Selon un aspect important de l'invention, l'orifice par lequel la gaine est introduite dans l'enceinte se prolonge vers l'intérieur par des bavettes en forme de bec de canard destinées à minimiser les fuites de gaz de l'enceinte lors de l'introduction de la gaine.

Par bavette on entend des pièces en un matériau souple comprenant une extrémité libre et une extrémité par laquelle elles sont fixées sur un support.

Un des avantages du présent dispositif de réversion est qu'il permet la mise en place de gaines de très grandes longueurs par réversion à l'aide d'air comprimé, en conservant tous les avantages liés à l'utilisation de l'air comprimé et en étendant considérablement les longueurs réalisables par cette méthode.

Un autre avantage réside dans le fait que le dispositif est sensiblement moins compliqué, moins lourd et donc moins cher que les équipements classiques connus. Il permet donc de remplacer avantageusement les équipements connus, même pour la réalisation de gainages de faible longueur.

Le présent dispositif de réversion utilisant un gaz comprimé permet de dissocier l'emplacement réservé au stockage de la gaine de celui de l'enceinte pressurisée permettant d'opérer le retournement et la progression de la gaine dans la conduite à rénover.

Le dispositif de réversion permet de réverser (retourner) au moyen d'un gaz comprimé de préférence au moyen d'air comprimé, des gaines pratiquement sans limitation de longueur ou de volume et de les faire progresser à l'intérieur ou à l'extérieur de conduites à rénover.

La gaine comprend de la résine à l'intérieur et lorsqu'elle est reversée, la colle vient s'appliquer contre la paroi de la conduite. La pression de gaz applique et maintient la gaine contre les parois de la conduite à rénover et ensuite, assure son collage pendant la phase de polymérisation à chaud ou à froid.

Toutefois, si la pression d'un fluide est indispensable pour assurer la réversion et la progression de la gaine, seule la portion déjà reversée et celle en cours de réversion doivent être maintenues sous pression. Le reste de la gaine alimente le dispositif de réversion au départ de son lieu de stockage tel qu'une roue, une bobine, une caisse ou un conteneur. Il n'est donc plus nécessaire de placer dès le départ toute la gaine dans le dispositif réverseur pressurisé.

Selon un premier mode de réalisation avantageux, l'orifice par lequel la gaine est introduite dans l'enceinte se prolonge vers l'intérieur par des bavettes en forme de bec de canard destinées à minimiser les fuites de gaz de l'enceinte lors de l'introduction de la gaine. Par bavette on entend des pièces en un matériau souple comprenant une extrémité libre et une extrémité par laquelle elles sont fixées sur un support.

De préférence, les bavettes en forme de "bec de canard" sont en un matériau souple.

Afin d'augmenter l'étanchéité du dispositif de réversion, les bavettes peuvent être pressées contre la gaine par deux profiles rigides.

Selon un autre mode de réalisation avantageux, les deux profiles rigides peuvent être garnis sur la face en contact avec les bavettes d'un bourrelet en matière déformable.

Pour empêcher la réversion des bavettes du "bec de canard" lorsque la gaine est retirée en marche arrière de l'enceinte, les bavettes peuvent être fixées à des profilés.

Il est avantageux de prévoir un dispositif de traction à l'intérieur de ladite enceinte pour y faciliter l'introduction de la gaine. En effet, si la pression à l'intérieur de l'enceinte augmente, les moyens pour limiter les fuites de gaz comprimé freinent l'introduction de la gaine par friction.

Selon un autre mode de réalisation avantageux, l'enceinte comprend un orifice de sortie adapté au diamètre de la gaine qui se prolonge vers l'intérieur de l'enceinte par un tronc de cône ou de cylindre permettant de fixer l'extrémité de la gaine à reverser.

Le dispositif de réversion comprend de préférence un dispositif mobile de stockage et d'alimentation de la gaine, pour alimenter l'enceinte.

Ce dispositif mobile peut comprendre une paire de cylindres à écartement réglable permettant de répartir d'une manière homogène la résine placée dans la gaine avant introduction dans l'enceinte sous pression.

De préférence, le dispositif mobile comprend un système de freinage pour contrôler l'introduction de la gaine dans ladite enceinte.

D'autres caractéristiques de l'invention sont décrites, à titre non limitatif, dans plusieurs modes de réalisation avantageux en relation avec les figures dans lesquels

Fig. 1: Vue d'ensemble du dispositif avec une gaine enroulée sur son touret à l'air libre et enceinte de réversion.

Fig. 2: Vue en coupe du dispositif d'entrée de la gaine dans l'enceinte pressurisée ("boîte aux lettres") et du dispositif en "bec de canard".

Fig. 3: Détail du dispositif de "bec de canard" destiné à permettre l'introduction de la gaine dans l'enceinte sans la dépressuriser.

Fig. 4: Dispositif de traction de la gaine à l'intérieur de l'enceinte de réversion.

Fig. 5: Vue montrant une gaine en cours de réversion.

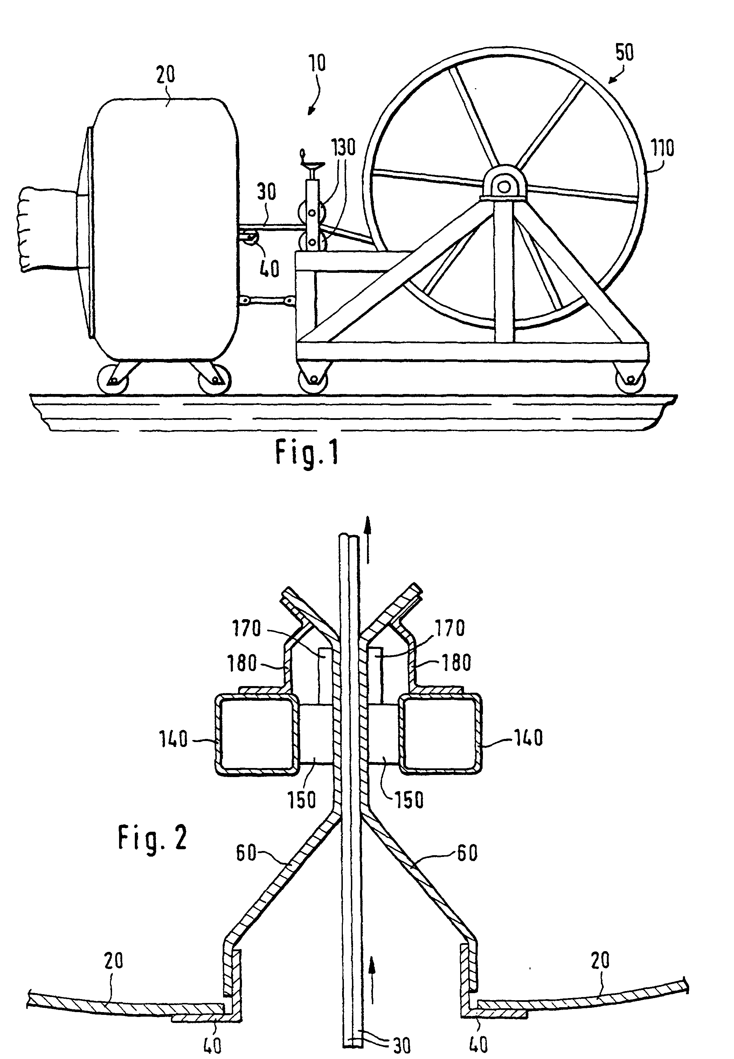

La Fig. 1 montre le dispositif de réversion 10 comprenant une enceinte pressurisable 20 dans laquelle une gaine 30 est introduite par une fente 40 en forme de "boîte aux lettres" à partir d'un dispositif de stockage 50.

Dans le présent dispositif de réversion 10, l'emplacement réservé au stockage et au déroulement de la gaine est dissocié de l'enceinte 20 sous pression permettant d'opérer le retournement et la progression de la gaine dans la conduite à rénover.

Le dispositif de stockage 50 permet à la gaine 30 de se mouvoir de manière continue de son dispositif de stockage 50 se trouvant à la pression atmosphérique vers l'intérieur de l'enceinte 20 sous pression sans que celle-ci ne subisse de perte de pression significative.

La Fig. 2 montre une vue en coupe du dispositif d'entrée de la gaine dans l'enceinte pressurisée ("boîte aux lettres") et du dispositif en "bec de canard". La fente d'introduction 40 de la gaine 30 dans l'enceinte 20 sous pression est constitué d'un orifice étroit dont les dimensions sont adaptées à la largeur de la gaine (tuyau plat) à introduire. Afin d'empêcher les fuites de pression pouvant survenir par les bords de la fente d'introduction 40, ceux-ci se prolongent vers l'intérieur de l'enceinte sous pression 20 par deux bavettes 60 en matière souple (caoutchouc, tissu enduit, feuille de silicone,...) formant une sorte de bec de canard. La pression interne de l'enceinte 20 a pour effet de presser les deux bavettes 60 l'une contre l'autre ou contre la gaine 30 pénétrant par la fente d'introduction 40 en formant ainsi une sorte de joint étanche.

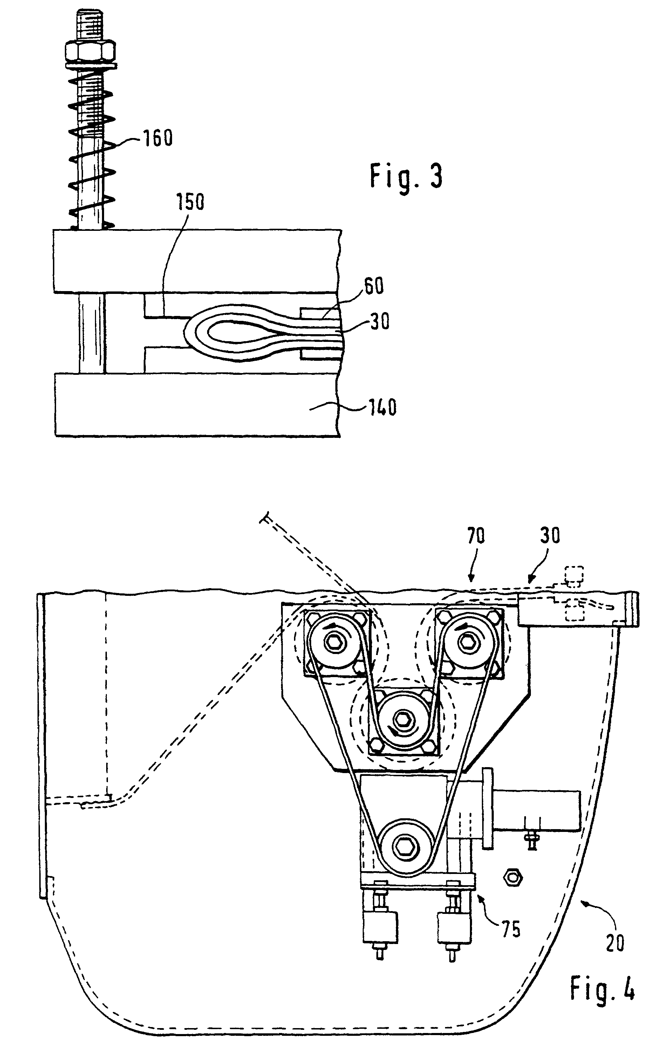

Afin d'épouser au mieux la forme de la gaine 30, les deux bavettes 60 sont pressées l'une contre l'autre par un dispositif constitué de deux profiles rigides 140 garnis sur la face en contact avec les bavettes 60 d'un bourrelet 150 en matière plastique déformable par pression. Les profils rigides 140 sont pressées par des ressorts 160 ou des vérins (Fig. 3). Les pertes de pression par les deux bavettes 60 en forme de bec de canard et la fente d'introduction 40 se trouvent ainsi réduites au minimum et peuvent être aisément compensées par un compresseur de débit approprié. Pour permettre de retirer éventuellement la gaine 30, les bavettes 60 du "bec de canard" sont munies sur leur surface externe de profilés souples 170 qui empêchent la réversion des bavettes 60. D'autres part, les extrémités des bavettes 60 sont solidarisées à un support 180 fixé aux deux profiles rigides 140.

La pression exercée par les deux bavettes 60 en forme de bec de canard sur la gaine 30 qui entre dans l'enceinte 20 sous pression crée une friction d'autant plus importante que ladite pression est élevée. Ces forces de friction freinent l'introduction de la gaine 30 et ralentissent ainsi sa progression par retournement en sortie de l'enceinte 20.

La Fig. 4 représente le dispositif de traction de la gaine situé à l'intérieur de l'enceinte de réversion. De manière à contrôler l'effet des forces de friction des bavettes sur la gaine, un dispositif de traction 70 mû par un motoréducteur 75 est placé dans l'enceinte 20 et situé juste après le "bec de canard" 60.

Une fois la gaine 30 introduite dans l'enceinte 20 via la fente 40 en forme de boîte aux lettres et le bec de canard 60, elle est entraînée vers l'intérieur par le dispositif de traction 70.

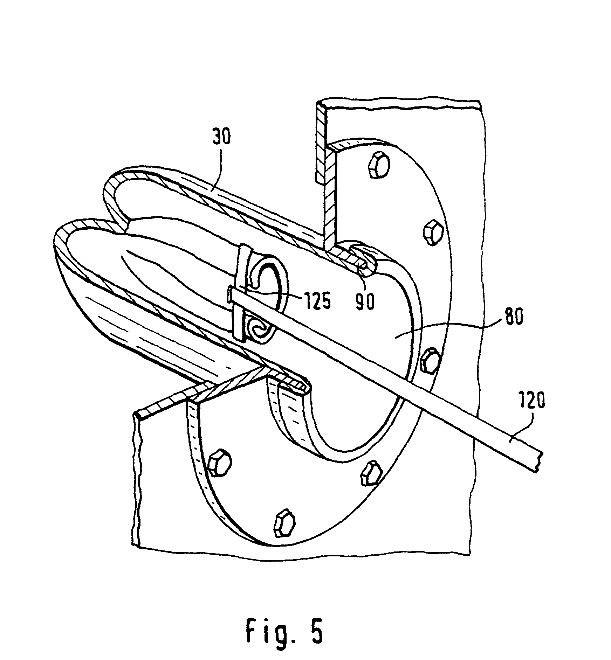

La Fig. 5 montre une gaine en cours de réversion. Du côté opposé à la fente 40 en forme de "boîte aux lettres", l'enceinte 20 est dotée d'un orifice 80 de sortie adaptable rond ou ovale dont le périmètre d'ouverture correspond à celui de la gaine 30 à mettre en oeuvre. Cet orifice 80 se prolonge quelque peu à l'intérieur de l'enceinte 20 par un tronc 90 conique ou cylindrique appelé "tête de réversion" sur lequel vient fermement se fixer l'extrémité de la gaine 30 à reverser. Une fois la gaine 30 fixée à la tête de réversion 90, l'enceinte 20 est soigneusement refermée et mise sous pression. La gaine 30 est progressivement introduite dans l'enceinte 20 à l'aide du dispositif de traction 70 et ne peut, sous l'effet de la pression, que se retourner autour de la "tête de réversion" 90 et sortir par l'orifice 80 rond ou ovale se trouvant à son extrémité.

Le retournement et la progression de la gaine 30 sont contrôlés par la pression interne de l'enceinte 20, par le dispositif de traction 70 ainsi que par un frein 100, par exemple un frein à disque hydraulique agissant sur l'axe du dispositif 110 (Fig. 1) de stockage où se trouve bobinée la gaine 30 à l'extérieur de l'enceinte 20 sous pression.

Dans la pratique, avant d'enrouler la gaine 30 sur le dispositif ou touret 110 de stockage, on introduit à l'intérieur de celle-ci une quantité prédéterminée de résine ou de colle liquide ou pâteuse puis on attache, à son extrémité, une sangle 120 (Fig. 5) de longueur supérieure à celle de la gaine.

Un soin tout particulier sera apporté à la jonction 125 (Fig. 5) entre la sangle 120 et la gaine 30 de manière à obtenir une fixation solide susceptible de résister aux forces de traction engendrées par le processus de réversion et par le freinage qui le contrôle. De plus, on évitera de créer des surépaisseurs trop importantes de manière à pouvoir passer sans difficultés au travers de la fente 40 d'introduction en forme de "boîte aux lettres".

On commence, par exemple, par enrouler la sangle 120 sur le touret 110 et on poursuit avec la gaine 30 en ayant soin de la faire préalablement passer entre des cylindres 130 (Fig. 1) de calandrage dont l'écartement est ajustable et dont le rôle est de répartir, de manière uniforme, la résine ou la colle sur les parois internes de la gaine 30.

Lorsque la sangle 120 et la gaine 30 sont enroulées sur le touret 110, celui-ci peut être solidarisé de l'enceinte 20 dans laquelle la gaine 30 est introduite, comme décrit plus haut.

L'ensemble du dispositif est amené en regard de l'entrée de la conduite à rénover. La gaine 30 est reversée sous l'effet de la pression et traverse l'enceinte 20 en se dévidant du touret 110.

L'alimentation en air comprimé est prévue en deux circuits de pressions différentes, l'une en haute pression pour le démarrage du processus, l'autre en basse pression pour le maintien des conditions de fonctionnement.

Ces deux circuits sont commutables par vannes manuelles ou électro vannes. Le principe des deux circuits et du frein aménagé sur le touret permet de régler la vitesse de réversion de manière précise.

Lorsque la moitié de la gaine 30 est reversée, la totalité de sa longueur a d'ores et déjà quitté le touret 110, la moitié se trouvant appliquée contre la paroi de la canalisation à rénover et le solde cheminant à l'intérieur du tronçon traité. Dès cet instant, et jusqu'à la fin de la réversion, c'est la sangle 120 de retenue qui permet de contrôler la progression de la gaine.

Lorsque la totalité de la gaine 30 est reversée, la pression est maintenue et on procède à la polymérisation de la résine ou de la colle en injectant de la vapeur, soit par l'intermédiaire de l'enceinte pressurisée, soit au moyen de seringues d'injection de vapeur introduites directement dans la gaine en début et/ou en fin de tronçon par exemple entre l'enceinte pressurisée et le début de la conduite. Dans ce cas, un dispositif d'obturation peut être prévu entre les seringues d'injection de vapeur et l'enceinte pressurisable dans le cas où l'on veut éviter que celle-ci ne soit en contact avec la vapeur.

Dans le cas de résines ou de colles (polymérisant) à froid, un tel dispositif d'obturation permettra de maintenir la pression dans la gaine le temps nécessaire, tout en libérant le dispositif de réversion pour d'autres opérations.

## Revendications

1. Dispositif de réversion pour la mise en place de gaines souples et étanches pour la rénovation ou la protection de canalisations par chemisage interne ou externe, comprenant une enceinte de réversion (20) pouvant être mise sous pression à l'aide d'un gaz comprimé dans laquelle la gaine (30) est introduite au fur et à mesure de la réversion par une fente d'introduction (40) comprenant des moyens pour limiter les fuites de gaz comprimé **caractérisé en ce que** la fente d'introduction (40) par laquelle la gaine (30) est introduite dans l'enceinte (20) se prolonge vers l'intérieur de l'enceinte (20) par des bavettes (60) en forme de bec de canard destinées à minimiser les fuites de gaz de l'enceinte lors de l'introduction de la gaine (30).

2. Dispositif de réversion selon la revendication 1, **caractérisé en ce que** les bavettes (60) sont pressées contre la gaine (30) par deux profiles rigides (140).

3. Dispositif de réversion selon la revendication 2, **caractérisé en ce que** les deux profiles rigides (140) sont garnis sur la face en contact avec les bavettes (60) d'un bourrelet (150) en matière déformable.

4. Dispositif de réversion selon l'une quelconque des revendications 1 à 3, **caractérisé en ce que** les bavettes (60) du "bec de canard" sont fixés à des profilés pour permettre de retirer la gaine (30).

5. Dispositif de réversion selon l'une quelconque des revendications précédentes, **caractérisé en ce qu'**il comprend un dispositif de traction à l'intérieur de ladite enceinte (20) pour faciliter l'introduction de la gaine (30) dans l'enceinte (20).

6. Dispositif de réversion selon l'une quelconque des revendications précédentes, **caractérisé en ce que** l'enceinte (20) comprend un orifice (80) de sortie adapté au diamètre de la gaine (30) qui se prolonge vers l'intérieur de l'enceinte (20) pour permettre de fixer l'extrémité de la gaine (30) à reverser.

7. Dispositif de réversion selon l'une quelconque des revendications précédentes, **caractérisé par** un dispositif mobile séparé de stockage (50) et d'alimentation de la gaine (30), pour alimenter l'enceinte (20).

8. Dispositif de réversion selon la revendication 7, **caractérisé en ce que** le dispositif mobile de stockage (50) comprend un dispositif de calandrage ayant une paire de cylindres à écartement réglable permettant de répartir uniformément une résine contenue à l'intérieure de la gaine (30).

9. Dispositif de réversion selon la revendication 7 ou 8, **caractérisé en ce que** le dispositif mobile comprend un système de freinage pour contrôler l'introduction de la gaine (30) dans ladite enceinte (20).

## Claims

1. Reversing device for the installation of leak-proof flexible linings for the renovation or protection of pipework by internal or external sheathing, comprising a reversing chamber (20) capable of being pressurised using a compressed gas, into which the lining (30) is introduced as the reversal proceeds through an input slot (40) comprising means for limiting leakages of the compressed gas, **characterised in that** the input slot (40) through which the lining (30) is introduced into the chamber (20) is extended towards the inside of the chamber (20) by duckbill-shaped feeder plates (60) intended to minimise leakages of gas from the chamber during the introduction of the lining (30).

2. Reversing device according to Claim 1, **characterised in that** the feeder plates (60) are pressed against the lining (30) by two rigid steel sections (140).

3. Reversing device according to Claim 2, **characterised in that** the two rigid steel sections (140) are lined on the face in contact with the feeder plates (60) with padding (150) made of a deformable material.

4. Reversing device according to any one of Claims 1 to 3, **characterised in that** the "duckbill" feeder plates (60) are fixed to steel sections in order to allow the lining (30) to be withdrawn.

5. Reversing device according to any one of the preceding claims, **characterised in that** it incorporates a traction device inside the said chamber (20) to facilitate the introduction of the lining (30) into the chamber (20).

6. Reversing device according to any one of the preceding claims, **characterised in that** the chamber (20) incorporates an output orifice (80) adapted to the diameter of the lining (30), which is extended towards the inside of the chamber (20) to make it possible to fix the end of the lining (30) to be reversed.

7. Reversing device according to any one of the preceding claims, **characterised by** a separate mobile device (50) for storing and feeding in the lining (30) in order to supply the chamber (20).

8. Reversing device according to Claim 7, **characterised in that** the mobile storage device (50) comprises a calendering device having a pair of cylinders with adjustable separation enabling a resin contained inside the lining (30) to be uniformly distributed.

9. Reversing device according to Claim 7 or 8, **characterised in that** the mobile device incorporates a braking system to control the introduction of the lining (30) into the said chamber (20).

## Patentansprüche

1. Umkehrvorrichtung zum Einbringen flexibler, dichter Schläuche für die Renovierung oder den Schutz von Rohrleitungen durch Innen- oder Außenverkleidung, mit einem mittels Druckgas druckbeaufschlagbaren Umkehrbehälter (20), in den der Schlauch (30) bei fortschreitender Umkehrung durch einen Einführschlitz (40), welcher Mittel zur Begrenzung der Druckgasverluste aufweist, eingeführt wird, **dadurch gekennzeichnet, dass** sich der Einführschlitz (40), durch welchen der Schlauch (30) in den Behälter (20) eingeführt wird, über entenschnabelförmige Lappen (60), welche die Druckverluste des Behälters bei der Einführung des Schlauchs (30) herabsetzen sollen, zum Innenraum des Behälters (20) hin fortsetzt.

2. Umkehrvorrichtung nach Anspruch 1, **dadurch gekennzeichnet, dass** die Lappen (60) durch zwei Starrprofile (140) gegen den Schlauch (30) gepresst werden.

3. Umkehrvorrichtung nach Anspruch 2, **dadurch gekennzeichnet, dass** die beiden Starrprofile (140) auf der mit den Lappen (60) in Kontakt stehenden Seite mit einem Wulst (150) aus deformierbarem Material versehen sind.

4. Umkehrvorrichtung nach irgendeinem der Ansprüche 1 bis 3, **dadurch gekennzeichnet, dass** die Lappen (60) des "Entenschnabels" an Profilen befestigt sind, um das Herausziehen des Schlauchs (30) zu ermöglichen.

5. Umkehrvorrichtung nach irgendeinem der vorhergehenden Ansprüche, **dadurch gekennzeichnet, dass** sie innerhalb des Behälters (20) eine Zugvorrichtung aufweist, um die Einführung des Schlauchs (30) in den Behälter (20) zu erleichtern.

6. Umkehrvorrichtung nach irgendeinem der vorhergehenden Ansprüche, **dadurch gekennzeichnet, dass** der Behälter (20) eine dem Durchmesser des Schlauchs (30) angepasste, sich zum Innenraum des Behälters (20) hin fortsetzende Austrittsöffnung (80) zur endseitigen Befestigung des umzukehrenden Schlauchs (30) aufweist.

7. Umkehrvorrichtung nach irgendeinem der vorhergehenden Ansprüche, **gekennzeichnet durch** eine separate fahrbare Speicher- (50) und Zuführvorrichtung für den Schlauch (30) zur Versorgung des Behälters (20).

8. Umkehrvorrichtung nach Anspruch 7, **dadurch gekennzeichnet, dass** die fahrbare Speichervorrichtung (50) eine Kalandriervorrichtung umfasst, welche ein Paar Walzen mit einstellbarem Abstand zum gleichmäßigen Verteilen eines innen im Schlauch (30) enthaltenen Harzes aufweist.

9. Umkehrvorrichtung nach Anspruch 7 oder 8, **dadurch gekennzeichnet, dass** die fahrbare Vorrichtung ein Bremssystem zur Kontrolle der Einführung des Schlauchs (30) in den Behälter (20) aufweist.
